# EUROPEAN PATENT SPECIFICATION

(11) **EP 4 015 383 B1**
(45) Date of publication and mention of the grant of the patent: **17.04.2024**
(21) Application number: 21216167.3
(22) Date of filing: 20.12.2021
(51) Int. Cl.: B64D 11/04

(54) **TOUCH SURFACES INCLUDING COPPER MATERIAL**
BERÜHRUNGSOBERFLÄCHEN MIT KUPFERMATERIAL
SURFACES TACTILES COMPRENANT UN MATÉRIAU À BASE DE CUIVRE

(30) Priority: 18.12.2020 US 202017126024
(43) Date of publication of application: 22.06.2022
(73) Proprietor: B/E Aerospace, Inc., Winston-Salem, NC 27105 (US)
(72) Inventor: FOSTER, Samuel, Milton Keynes, MK15 9AU (GB)
(74) Representative: Dehns

(56) References cited:
- EP-A1- 3 916 043
- WO-A1-2015/196022
- WO-A2-2012/135294
- US-A1- 2007 243 263
- US-A1- 2013 323 289
- US-A1- 2014 059 796
- ZHAO BIN ET AL: "Microorganisms @ materials surfaces in aircraft: Potential risks for public health? - A systematic review", TRAVEL MEDICINE AND INFECTIOUS DISEASE, ELSEVIER, AMSTERDAM, NL, vol. 28, 27 July 2018 (2018-07-27), pages 6-14, XP085651574, ISSN: 1477-8939, DOI: 10.1016/J.TMAID.2018.07.011

## Description

### Background

### Technological Field

The present disclosure relates to an aircraft galley, and more particularly to an aircraft galley having touch surfaces to prevent bacterial and viral spread

### Description of Related Art

The COVID-19 virus and other common viruses can be transmitted by touching common surfaces and leaving behind some amount of saliva with viral particles. Due to the heightened need for aircraft and other high density vehicles to have additional protective measures to prevent or limit infection especially on high frequency touch points such as handles, knobs, latches and catches, to prevent cross contamination and the spread of the virus between passengers and cabin crew.

With a new global reality and increased risk in place a need has arisen for effective passive counter to viral contamination without any additional chemical cleaning, while providing simple installation and replacement, and potential for retrofitting to currently in-service aircraft.

There also remains a need in the art for such systems, methods, and components that are economically viable. The present disclosure may provide a solution for at least one of these remaining challenges. Touch surfaces are discussed in EP 3 916 043, which falls under Article 54(3) EPC, and WO 2012/135294.

ZHAO BIN ET AL: "Microorganisms @ materials surfaces in aircraft: Potential risks for public health? - A systematic review",TRAVEL MEDICINE AND INFECTIOUS DISEASE, ELSEVIER, AMSTERDAM, NL, vol. 28, 27 July 2018 (2018-07-27), pages 6-14, XP085651574,ISSN: 1477-8939, DOI: 10.1016/J.TMAID.2018.07.011 is concerned with microorganisms and materials surfaces in aircraft.

### Summary of the Invention

An aircraft including a cabin galley having a plurality of touch surfaces is provided as defined in claim 1.

The touch surface can include a counter top or a drawer handle.

A majority of the touch surfaces can be copper plated. A portion of the touch surfaces or touch surface does not include copper. A majority of the touch surfaces of the cabin galley can include a copper material. A majority of handles within the galley can include a copper surface. The copper material includes a non-copper overlay, wherein the non-copper overlay is opaque. The non-copper overlay can include a non-copper dye. The non-copper overlay can cover a majority of the copper material. The non-copper overlay may leave a portion of the copper material uncovered. The copper material may be not visible on the human visibility spectrum. The copper material can include a copper alloy. The copper material overlays a substrate not including copper material. The copper material can be removably attached to a substrate. These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:

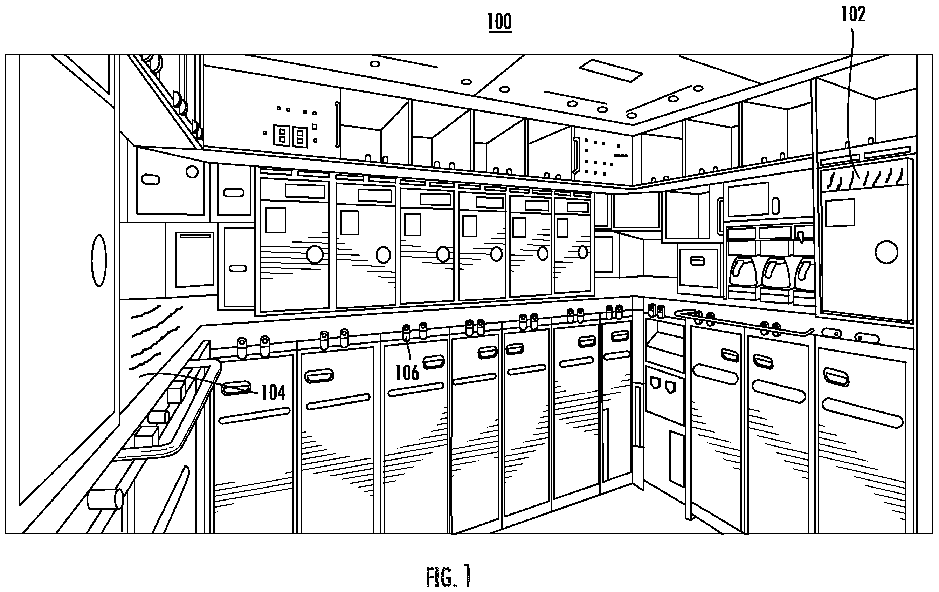

Fig. 1 is a perspective view of a galley of an aircraft according to an embodiment of the invention.

### Detailed Description

Reference will now be made to the drawings wherein like reference numerals identify similar structural features or aspects of the subject invention. For purposes of explanation and illustration, and not limitation, a partial view of an exemplary embodiment of a galley of an aircraft in accordance with the invention is shown in Fig. 1 and is designated generally by reference character 100. The systems of the invention can be used to decrease viral and bacterial transmission rates by touch surfaces in an aircraft setting.

Fig. 1 shows the interior of an aircraft cabin galley 100 having a plurality of touch surfaces 102, 104, 106. A touch surface can include anything that requires to be touched by a crew member or passenger to be activated or used. A touch surface can include a handle, a counter-top, a door handle, a touch screen interface, a button. Multiple places on an aircraft require contact in a very particular spot, ensuring that if two people touch the item, the contact will be in the same space. In order to reduce the probability of viral and bacterial transmission at that location. The copper material overlays a substrate that does not include copper material.
The copper material can be removably attached to a substrate.

Fig. 1 further shows that at least one of the touch surfaces includes a copper material wherein the copper material portion is user facing and accessible to a user. At least one of the touch surfaces can be connected to a touch-screen interface 102. According to a non-claimed example, the user-facing portion of the touch screen interface can be copper plated. The copper plating can be thin enough that it is transparent, thus allowing the touch screen interface to still be viewed and used.

The touch surface can include a counter top 104 or drawer handle 106. It is conceived that a majority of the touch surfaces within the galley can be copper plated. Some touch surfaces are not able to include copper for electrical transmission purposes, thus some touch surfaces within the galley remain without a copper plating. Some of the touch surfaces can be partially covered with a copper material.

In order provide further antibacterial protection or to improve visibility of the copper material to a user, in order for the users to target the copper surfaces or portions of surfaces the copper can include a non-copper overlay or coating. The non-copper overlay wherein the non-copper overlay is opaque and is non-copper colored. The coating allows the copper antibacterial and anti-viral properties to still permeate and render the copper useful, while also enhancing the look, feel, and visibility of the copper surfaces. The non-copper overlay can include a color that includes a wavelength visible to the human eye. The non-copper overlay can cover a majority of the copper material but leave a portion of the copper material uncovered.

The methods and systems of the present disclosure, as described above and shown in the drawings, provide for a galley system providing better protection from viral and bacterial spread. While the apparatus and methods of the subject disclosure have been showing and described with reference to embodiments, those skilled in the art will readily appreciate that changes and/or modifications may be made thereto without departing from the scope of the invention as defined by the claims.

## Claims

1. An aircraft, comprising:
a cabin galley having a plurality of touch surfaces (102, 104, 106);
**characterised in that**
at least one of the touch surfaces includes a copper material;
wherein the at least one touch surface is connected to a touch screen interface forming a substrate not including copper material; and wherein the copper material overlays the substrate.

2. The aircraft of claim 1, wherein the at least one of the touch surfaces includes a user facing surface.

3. The aircraft of claim 1 or 2, wherein the copper material is transparent,

4. The aircraft of any preceding claim, wherein the at least one of the touch surfaces includes a counter top (104), or a drawer handle (106).

5. The aircraft of any preceding claim, wherein a majority of the at least one of the touch surfaces is copper plated.

6. The aircraft of any preceding claim, wherein a majority of the plurality of touch surfaces of the cabin galley include a copper material.

7. The aircraft of any preceding claim, wherein the plurality of touch surfaces include a plurality of handles, and wherein a majority of the plurality of handles within the galley include a copper surface.

8. The aircraft of any preceding claim, wherein the copper material includes a non-copper overlay.

9. The aircraft of claim 8, wherein the non-copper overlay is opaque, or wherein the non-copper overlay includes a non-copper color.

10. The aircraft of claim 8,
wherein the non-copper overlay covers a majority of the copper material, and optionally wherein the non-copper overlay does not cover a portion of the copper material.

11. The aircraft of any preceding claim, wherein the copper material is not visible on the human visibility spectrum, and/or wherein the copper material includes a copper alloy.

## Patentansprüche

1. Luftfahrzeug, umfassend:
eine Bordküche der Kabine, die eine Vielzahl von Berührungsoberflächen (102, 104, 106) aufweist;
**dadurch gekennzeichnet, dass** mindestens eine der Berührungsoberflächen ein Kupfermaterial beinhaltet;
wobei die mindestens eine Berührungsoberfläche mit einer Schnittstelle des Berührungsbildschirms verbunden ist und ein Substrat ausbildet, das kein Kupfermaterial beinhaltet; und wobei das Kupfermaterial das Substrat überlagert.

2. Luftfahrzeug nach Anspruch 1, wobei die mindestens eine der Berührungsoberflächen eine dem Benutzer zugewandte Oberfläche beinhaltet.

3. Luftfahrzeug nach Anspruch 1 oder 2, wobei das Kupfermaterial transparent ist.

4. Luftfahrzeug nach einem der vorhergehenden Ansprüche, wobei die mindestens eine der Berührungsoberflächen eine Arbeitsplatte (104) oder einen Schubladengriff (106) beinhaltet.

5. Luftfahrzeug nach einem der vorhergehenden Ansprüche, wobei ein Großteil der mindestens einen der Berührungsoberflächen verkupfert ist.

6. Luftfahrzeug nach einem der vorhergehenden Ansprüche, wobei ein Großteil der Vielzahl von Berührungsoberflächen der Bordküche der Kabine ein Kupfermaterial beinhaltet.

7. Luftfahrzeug nach einem der vorhergehenden Ansprüche, wobei die Vielzahl von Berührungsoberflächen eine Vielzahl von Griffen beinhaltet und wobei ein Großteil der Vielzahl von Griffen innerhalb der Bordküche eine Kupferoberfläche beinhaltet.

8. Luftfahrzeug nach einem der vorhergehenden Ansprüche, wobei das Kupfermaterial eine kupferfreie Überlagerung beinhaltet.

9. Luftfahrzeug nach Anspruch 8, wobei die kupferfreie Überlagerung undurchsichtig ist oder wobei die kupferfreie Überlagerung eine kupferfreie Farbe beinhaltet.

10. Luftfahrzeug nach Anspruch 8, wobei die kupferfreie Überlagerung einen Großteil des Kupfermaterials abdeckt und wobei die kupferfreie Überlagerung optional keinen Abschnitt des Kupfermaterials abdeckt.

11. Luftfahrzeug nach einem der vorhergehenden Ansprüche, wobei das Kupfermaterial in dem menschlichen Sichtspektrum nicht sichtbar ist und/oder wobei das Kupfermaterial eine Kupferlegierung beinhaltet.

## Revendications

1. Aéronef comprenant :
une cuisine de cabine ayant une pluralité de surfaces tactiles (102, 104, 106) ;
**caractérisé en ce qu'**au moins l'une des surfaces tactiles comporte un matériau en cuivre ;
dans lequel l'au moins une surface tactile est connectée à une interface d'écran tactile formant un substrat ne comportant pas de matériau en cuivre ; et dans lequel le matériau en cuivre recouvre le substrat.

2. Aéronef selon la revendication 1, dans lequel l'au moins une des surfaces tactiles comporte une surface tournée vers l'utilisateur.

3. Aéronef selon la revendication 1 ou 2, dans lequel le matériau en cuivre est transparent.

4. Aéronef selon une quelconque revendication précédente, dans lequel l'au moins une des surfaces tactiles comporte un comptoir (104) ou une poignée de tiroir (106).

5. Aéronef selon une quelconque revendication précédente, dans lequel la majorité de l'au moins une des surfaces tactiles est cuivrée.

6. Aéronef selon une quelconque revendication précédente, dans lequel une majorité de la pluralité de surfaces tactiles de la cuisine de cabine comporte un matériau en cuivre.

7. Aéronef selon une quelconque revendication précédente, dans lequel la pluralité de surfaces tactiles comporte une pluralité de poignées, et dans lequel la majorité de la pluralité de poignées à l'intérieur de la cuisine comporte une surface en cuivre.

8. Aéronef selon une quelconque revendication précédente, dans lequel le matériau en cuivre comporte un revêtement sans cuivre.

9. Aéronef selon la revendication 8, dans lequel le revêtement sans cuivre est opaque, ou dans lequel le revêtement sans cuivre comporte une couleur sans cuivre.

10. Aéronef selon la revendication 8, dans lequel le revêtement sans cuivre recouvre la majorité du matériau en cuivre et, éventuellement, dans lequel le revêtement sans cuivre ne couvre pas une partie du matériau en cuivre.

11. Aéronef selon une quelconque revendication précédente, dans lequel le matériau en cuivre n'est pas visible sur le spectre de visibilité humaine, et/ou dans lequel le matériau en cuivre comporte un alliage de cuivre.
